# EUROPÄISCHE PATENTSCHRIFT

(11) **EP 3 390 590 B1**
(45) Veröffentlichungstag und Bekanntmachung des Hinweises auf die Patenterteilung: **14.09.2022**
(21) Anmeldenummer: 16816249.3
(22) Anmeldetag: 14.12.2016
(51) Int. Cl.: C10L 5/46, C10L 9/08, C02F 11/04, C02F 11/18, C02F 9/00, C02F 11/121, C02F 11/122, C02F 11/127, C02F 11/14, C02F 101/10, C02F 11/16, C02F 1/20, C02F 101/16

(54) **VERFAHREN ZUR FAULUNG UND HYDROTHERMALEN KARBONISIERUNG VON KLÄRSCHLAMM**
METHOD FOR THE DIGESTION AND HYDROTHERMAL CARBONIZATION OF SEWAGE SLUDGE
PROCÉDÉ DE DÉCOMPOSITION ET DE CARBONISATION HYDROTHERMALE DE BOUES DE CURAGE

(30) Priorität: 15.12.2015 DE 102015016194
(43) Veröffentlichungstag der Anmeldung: 24.10.2018
(73) Patentinhaber: TerraNova Energy GmbH, 40211 Düsseldorf (DE)
(72) Erfinder: BUTTMANN, Marc, 40235 Düsseldorf (DE)
(74) Vertreter: Rössler, Matthias
(86) Internationale Anmeldenummer: PCT/EP2016/080938
(87) Internationale Veröffentlichungsnummer: WO 2017/102814

(56) Entgegenhaltungen:
- EP-A1- 2 746 231
- WO-A1-2011/060904
- WO-A1-2012/132799
- DE-A1-102013 104 965

## Beschreibung

Die vorliegende Erfindung betrifft ein Verfahren zur hydrothermalen Karbonisierung und Faulung von Klärschlamm, bei dem die Vorrichtung zur hydrothermalen Karbonisierung und die Vorrichtung zur Faulung in wechselnder Reihenfolge vom Klärschlamm durchflossen werden.

Bei der hydrothermalen Karbonisierung (HTC) wird Biomasse unter Luftabschluss bei Temperaturen zwischen 170°C und 200°C [Grad Celsius] innerhalb weniger Stunden in einen Kohleschlamm umgewandelt. Der Stand der Technik wird bspw. durch DE 10 2007 062 808, DE 10 2007 062 809, DE 10 2007 062 810, DE 10 2007 062 811, DE 10 2007 056 170, DE 10 2008 058 444 beschrieben. In diesen Schriften wird die hydrothermale Karbonisierung verschiedener Arten von Biomasse unter unterschiedlichen Reaktionsbedingungen und in verschiedenen Verfahren erläutert.

In den letzten Jahren hat sich die Anwendung der hydrothermalen Karbonisierung auf die Verarbeitung von Klärschlamm konzentriert. Klärschlamm ist ein Abfallstoff aus der Abwasserreinigung, der durch die Kläranlagen kostenpflichtig entsorgt werden muss. Hierbei ist vor allem der hohe Entwässerungsgrad von bis zu 70% Trockensubstanzanteil, der sich beim Klärschlamm im Anschluss an die Behandlung durch HTC erreichen lässt, vorteilhaft, da dadurch die zu entsorgende Restmenge deutlich verringert wird und Entsorgungskosten eingespart werden.

Es ist bekannt, dass das bei der Entwässerung des (durch) HTC behandelten Klärschlamms entstehende Filtrat einen hohen Anteil leicht biologisch abbaubaren Kohlenstoffs enthält, der sich gut zur anaeroben Behandlung in einer Faulung zur Erzeugung von Biogas eignet. Der Stand der Technik ist beispielsweise in "Anaerobic treatment of Waste Water Derived from Hydrothermal Carbonization" (B. Wirth et.al., 20th Biomass Conference Milan, June 2012) beschrieben.

US 5 217 625 A beschreibt Prozessbedingungen zur Behandlung von Klärschlamm, die denen der HTC ähnlich sind. Hier wird nach der Entwässerung des entstandenen Kohleschlamms ein gut brennbarer Filterkuchen hergestellt, der in einer nachfolgenden thermischen Verwertung energieeffizient entsorgt werden kann.

Nachteilig an der HTC nach vorgenannter Anwendung ist, dass lediglich ein Teil des in der HTC behandelten Klärschlamms, nämlich das anschließend abgetrennte Filtrat, zur Erzeugung von Biogas genutzt wird. Damit bleiben etwa 75% des im Klärschlamm enthaltenen Kohlenstoffs zur Biogaserzeugung ungenutzt.

Das Verfahren der Thermo-Druck-Hydrolyse (TDH) ist ähnlich der HTC. Dieses wird seit längerer Zeit zur Vorbehandlung von Klärschlamm vor einer Faulung angewendet. Der Stand der Technik ist beispielsweise in "Auswirkungen der thermischen Klärschlammhydrolyse und der prozessintegrierten Nährstoffrückgewinnung auf die Stoffstrom- und Energiebilanzen auf Kläranlagen", DBU Abschlussbericht AZ 24507- 23, beschrieben. Hierbei werden bei Temperaturen unter 170°C und Behandlungszeiten von 20-60 min [Minuten] die langkettigen Kohlehydratgruppen des Klärschlamms aufgespaltet und die Verfügbarkeit für die biogasproduzierenden Bakterien erhöht. Dadurch wird der Biogasertrag der Klärschlammfaulung um 10-30% erhöht.

Nachteilig an der TDH ist, dass sich der Klärschlamm nach TDH und Faulung nicht gut entwässern lässt. Es werden lediglich Trockensubstanzgehalte von 30-40% erreicht.

Beide Verfahren, TDH und HTC, erfordern eine aufwändige Anlagentechnik, so dass die damit verbundenen Investitionen durch die jeweiligen Vorteile nicht immer zu rechtfertigen sind und die Kläranlagen damit den Klärschlamm weiterhin auf konventionelle Weise ohne energetische Nutzung entsorgen.

Aus der WO 2011/060904 A1 ist ein Verfahren zur Herstellung von Bodenzusatzstoffen bekannt. Dabei wird Klärschlamm einer hydrothermalen Karbonisierung unterzogen. Der so entstehende Kohleschlamm kann dann einer Fermentation zugeführt werden.

Aus der DE 10 2013 104 965 A1 ist ein Verfahren zur Behandlung von Faulschlamm bekannt, der mittels einer hydrothermalen Karbonisierung in ein Trockenmaterial umgewandelt wird.

Es ist Aufgabe der vorliegenden Erfindung, die mit Bezug auf den Stand der Technik geschilderten Probleme zumindest teilweise zu lösen und insbesondere in einer Anlage sowohl eine HTC als auch eine TDH des Klärschlamms durchzuführen, durch Verwendung der gleichen Anlagentechnik die Investitionskosten zu minimieren, dabei gleichzeitig die Vorteile der HTC und der TDH zu erzielen und damit einen wirtschaftlicheren Betrieb und einer verbesserte Energieeffizienz zu ermöglichen.

Die Aufgabe wird durch die Merkmale des unabhängigen Patentanspruchs 1 gelöst. Vorteilhafte Weiterbildungen sind Gegenstand der abhängigen Patentansprüche. Die in den Patentansprüchen einzeln aufgeführten Merkmale sind in technologisch sinnvoller Weise miteinander kombinierbar und können durch erläuternde Sachverhalte aus der Beschreibung und Details aus der Figur ergänzt werden, wobei weitere Ausführungsvarianten der Erfindung aufgezeigt werden.

Die Anlagentechnik der HTC wird wechselweise in einem "HTC-Modus" und in einem "TDH-Modus" betrieben und entsprechend unterschiedlich mit der Klärschlammfaulung verbunden:
Im "HTC-Modus" wird die HTC Anlage nach der Faulung betrieben, so dass der Klärschlamm zunächst der Faulung (dem Faulbehälter) entnommen wird, dann in einer ersten Entwässerung auf einen Trockensubstanzgehalt von 20-30% eingestellt und anschließend in der HTC Anlage behandelt wird, so dass sich in der anschließenden (zweiten) Entwässerung ein hoher Entwässerungsgrad von bis zu 70% Trockensubstanzanteil erzielen lässt. Das bei der (zweiten) Entwässerung abgetrennte Filtrat wird anschließend auf einen pH-Wert > 9 pH erhöht, so dass durch dem Fachmann bekannte Verfahren der Stickstoff-Strippung, Calcium-Fällung, Struvit-Kristallisation oder ähnlicher Verfahren die Konzentration an Phosphor und/oder Stickstoff erniedrigt wird (Abtrennung von Nährstoffen). Das so behandelte Filtrat (gereinigtes Filtrat) wird anschließend in den Faulprozess (Faulbehälter) zurückgeführt um durch die darin (im Filtrat) vorhandene Organik den Faulgasertrag zu erhöhen.

Während des Betriebs im "HTC-Modus" werden die zur HTC üblichen Prozessparameter, insbesondere bezüglich des pH-Werts im Bereich pH 3 bis 6, der Prozesstemperatur im Bereich 170-200°C und der Aufenthaltszeiten im Bereich 2,5 bis 4 Stunden eingehalten.

Während des Betriebs der HTC Anlage im "HTC-Modus" wird dem Faulbehälter kein oder nur eine Teilmenge an Klärschlamm, wobei hierzu insbesondere der gut faulbare Primärschlamm einer Kläranlage geeignet ist, zugeführt, so dass in dieser Zeit der nicht der Faulung zugeführte, unbehandelte Klärschlamm in einem separaten Speicher zwischengespeichert werden muss.

Nach Abschluss des Betriebs im "HTC-Modus", der beispielsweise durch das Erreichen eines unteren Füllstands im Faulbehälter oder durch die zeitliche Dauer des Betriebs im "HTC-Modus" bestimmt wird, wird sowohl der Eintrag als auch der Austrag der HTC Anlage, beispielsweise durch das Umlegen von Ventilen oder Schiebern in Rohrleitungen, in der Art umgeschaltet, dass die HTC Anlage vor der Faulung betrieben wird. Dabei wird der noch nicht behandelte Klärschlamm (unbehandelter Klärschlamm) beispielsweise aus dem separaten Zwischenspeicher oder aus einer (Vorrichtung zur) Entwässerung der HTC Anlage zugeführt, die den Trockensubstanzgehalt idealerweise auf 10-20% einstellt. In diesem Bereich ist der Klärschlamm für die anschließende TDH Behandlung konzentriert genug, um energieeffizient thermisch behandelt zu werden und nach der TDH Behandlung noch ausgefault werden zu können. Der Betriebsmodus wird nun auf "TDH-Modus" umgeschaltet.

Während des Betriebs (der HTC-Anlage) im "TDH-Modus" werden die zur TDH üblichen Prozessparameter, insbesondere bezüglich des pH-Werts im Bereich pH 5 bis 8, der Prozesstemperatur im Bereich 150 bis 170°C und der Aufenthaltszeiten im Bereich 0,5 bis 2 Stunden eingehalten. Die Änderung der Prozessparameter kann beispielsweise durch eine Erhöhung der Durchflussgeschwindigkeit des Klärschlamms durch die HTC Anlage erfolgen - bei gleichbleibendem Volumen des Reaktionsraums in der HTC Anlage sinkt somit die Aufenthaltsdauer proportional. Ebenso ist es möglich, das Reaktionsvolumen zu reduzieren - beispielsweise durch das Abschalten paralleler Reaktionsvolumina im druckbeaufschlagten Teil der HTC Anlage.

Der im "TDH-Modus" behandelte Klärschlamm wird anschließend dem Faulbehälter zugeführt. Während des Betriebs der HTC Anlage im "TDH-Modus" wird dem Faulbehälter kein Klärschlamm entnommen, so dass in dieser Zeit der Faulbehälter als Zeit- und Menge-Puffer dient. Nach Abschluss des Betriebs im "TDH-Modus", der beispielsweise durch das Erreichen eines oberen Füllstands im Faulbehälter oder durch die zeitliche Dauer des Betriebs im "TDH-Modus" bestimmt wird, wird sowohl der Eintrag als auch der Austrag der HTC Anlage in der Art umgeschaltet, dass die HTC Faulung wieder nach der Faulung betrieben wird. Es schließt sich wieder der oben beschriebene Betrieb im "HTC-Modus" an.

Die Erfindung ermöglicht, dass
- mit einer Anlage sowohl eine TDH als auch eine HTC von Klärschlamm durchgeführt werden kann und damit zwei bislang unabhängige Verfahrensschritte seriell durchlaufen werden können;
- Investitionskosten in die Anlagentechnik und damit die spezifischen Kosten der Verfahren reduziert, Betriebskosten eingespart und die Wirtschaftlichkeit für den Anwender verbessert werden;
- der zu entsorgende Klärschlamm nach der Behandlung im "HTC-Modus" auf bis zu 70% Trockensubstanzgehalt entwässert und die Menge minimiert ist; wodurch sich Kostenersparnisse bei der kostenpflichtigen Entsorgung ergeben;
- der Faulgasertrag sowohl durch die Rückführung des Filtrats in den Faulbehälter im "HTC-Modus" um 10% als auch durch die Vorbehandlung des nicht ausgefaulten Klärschlamms im "TDH-Modus" um weitere 20 bis 30% erhöht wird;
- Phosphor und Stickstoff im Betrieb der HTC Anlage nach der Faulung (im "HTC Modus") und der anschließenden Entwässerung zurückgewonnen werden; wobei eine Hemmung der Faulgas produzierenden Bakterien durch zu hohe Konzentrationen an Stickstoffverbindungen beim rückgeführten Filtrat vermieden wird.

Es wird ein Verfahren zur hydrothermalen Karbonisierung und Faulung von Klärschlamm vorgeschlagen, wobei wechselweise eine Vorrichtung zur hydrothermalen Karbonisierung (HTC-Anlage) von Klärschlamm einer Vorrichtung zur Faulung (Faulbehälter) von Klärschlamm vor- und nachgeschaltet wird, sodass die Vorrichtung zur Hydrothermalen Karbonisierung und die Vorrichtung zur Faulung in wechselnder Reihenfolge vom Klärschlamm durchflossen werden.

Insbesondere durchläuft der Klärschlamm bei vorgeschalteter Faulung zunächst eine Faulung, wird anschließend mit oder ohne Entwässerung einer hydrothermalen Karbonisierung zugeführt und wird anschließend entwässert, wobei die in der Entwässerung entstehende flüssige Phase (Filtrat) der vorgeschalteten Faulung (dem Faulbehälter) wieder zugeführt wird.

Insbesondere wird die flüssige Phase (Filtrat) vor der Zuführung in die vorgeschaltete Faulung (Faulbehälter) im pH Wert auf > pH6, insbesondere > pH7, bevorzugt > pH8, besonders bevorzugt > pH9 angehoben.

Dies kann über die Zumischung von Calciumsilikathydrat (CSH) geschehen. So wird dem Filtrat 5 Massenprozent, bevorzugt 7,5 Massenprozent, besonders bevorzugt 10 Massenprozent CSH in einer Korngröße von 0 bis 1 mm [Millimeter] unter Verwendung eines Rührwerks zur Durchmischung zugegeben und eine Reaktionsdauer von mindestens 20 Minuten, bevorzugt mindestens 60 Minuten, besonders bevorzugt mindestens 90 Minuten abgewartet. Anschließend wird das CSH in einer Fest-Flüssigtrennung, beispielsweise einer Kammerfilterpresse, einer Zentrifuge oder einer Siebvorrichtung, abgetrennt.

Insbesondere wird nach der pH-Anhebung ein Teil des in der flüssigen Phase (in dem Filtrat) enthaltenen Stickstoff oder Phosphor durch Ausgasen, Kristallisation oder Fällungsreaktion in dem Maße abgetrennt, dass damit die Konzentration von Stickstoff oder Phosphor in der flüssigen Phase (im Filtrat) um > 20%, bevorzugt > 30%, besonders bevorzugt > 50% reduziert wird.

Bevorzugt ist die Aufenthaltsdauer des Klärschlamms im druckbeaufschlagten Bereich der Vorrichtung zur hydrothermalen Karbonisierung (HTC Anlage) bei nachgeschalteter Faulung (im "TDH-Modus") um mindestens 30 min [Minuten], bevorzugt mindestens 45 min, besonders bevorzugt mindestens 60 min kleiner als bei vorgeschalteter Faulung (im "HTC-Modus"), indem die Durchflussgeschwindigkeit des Klärschlamms um mindestens 30% erhöht oder das druckbeaufschlagte Volumen der Vorrichtung zur hydrothermalen Karbonisierung um mindestens 30% kleiner als bei vorgeschalteter Faulung ist.

Die Einstellung der Durchflussgeschwindigkeit erfolgt insbesondere durch die Regelung von frequenzgesteuerten Pumpen in der HTC Anlage sowohl am Einlass als auch am Auslass des druckbeaufschlagten Bereichs.

Insbesondere ist die Temperatur, die in der Vorrichtung zur hydrothermalen Karbonisierung (HTC Anlage) maximal erreicht wird, bei nachgeschalteter Faulung (im "TDH-Modus") um mindestens 5°C, bevorzugt mindestens 10°C, besonders bevorzugt mindestens 15°C kleiner als bei vorgeschalteter Faulung ("HTC-Modus").

Die Einstellung der Temperatur erfolgt insbesondere durch eine Regelung des Wärmeeintrags in den Reaktor und kann beispielsweise durch Abschalten einer Wärmequelle oder durch Regelung der Durchflussmenge eines Wärmeträgermediums, wie beispielsweise Thermalöl, erfolgen, das durch einen Außenmantel des Reaktors geleitet wird.

Insbesondere erfolgt der Wechsel der Reihenfolge, in der der Klärschlamm die Vorrichtung zur hydrothermalen Karbonisierung (HTC Anlage) und die Vorrichtung zur Faulung (Faulbehälter) durchfließt, durch Umschalten von Ventilen oder Schiebern, und zwar in dem Moment, zu dem ein vordefinierter Füllstand in der Vorrichtung zur Faulung (Faulbehälter) erreicht wird und/oder eine vordefinierte Klärschlammmenge behandelt wurde und/oder ein vordefiniertes Zeitintervall abgelaufen ist.

Der Transport des Klärschlamms zwischen den wechselseitig verschalteten Anlagenteilen HTC Anlage und Faulbehälter erfolgt bevorzugt durch Pumpen, wie beispielsweise Kreiselpumpen, Exzenterschneckenpumpen, Membranpumpen oder Kolbenpumpen.

Insbesondere wird der Klärschlamm vor der hydrothermalen Karbonisierung auf >10%, bevorzugt >15%, besonders bevorzugt >20% Trockensubstanzgehalt entwässert.

Weiter werden Vorrichtungen zur Durchführung der erfindungsgemäßen Verfahren vorgeschlagen.

Die Erfindung sowie das technische Umfeld werden nachfolgend anhand der Figur näher erläutert. Die Figur zeigt besonders bevorzugte Ausführungsbeispiele, auf die die Erfindung jedoch nicht beschränkt ist. Insbesondere ist darauf hinzuweisen, dass die Figur und insbesondere die dargestellten Größenverhältnisse nur schematisch sind. Gleiche Bezugszeichen bezeichnen gleiche Gegenstände. Es zeigen:

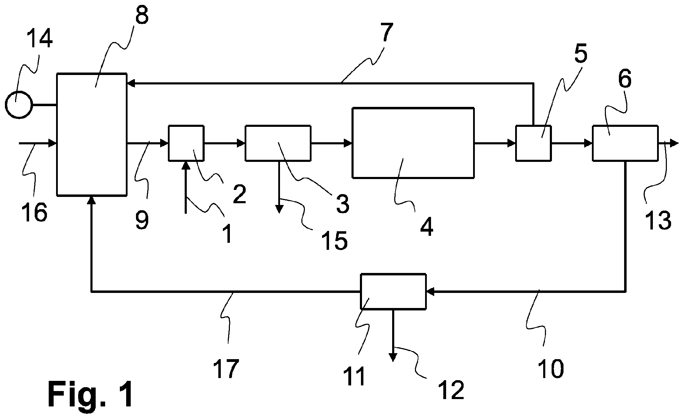

- Fig. 1:: eine Vorrichtung zur hydrothermalen Karbonisierung von Klärschlamm; und

Die folgenden Ausführungen beschreiben beispielhaft Vorrichtungen zur Durchführung des Verfahrens:
Fig. 1 zeigt eine Vorrichtung zur hydrothermalen Karbonisierung von Klärschlamm (HTC Anlage 4), die wechselweise vor und nach einer Vorrichtung zur Faulung, i.e. einem Faulbehälter 8, betrieben wird (geeignet zur Durchführung des ersten Verfahrens).

Im Rahmen des Betriebs der HTC Anlage 4 im "TDH-Modus" (vor der Faulung) wird nicht behandelter Klärschlamm 1, dies kann beispielsweise Primärschlamm aus der Vorreinigung der Kläranlage, Überschussschlamm aus der biologischen Stufe einer Kläranlage oder ein Gemisch aus beiden sein, über ein (erstes) 2/3 Wegeventil 2 einer (ersten) Entwässerungsmaschine 3, dies kann beispielsweise eine Zentrifuge, Kammerfilterpresse oder Schnecke sein, zugeführt, in der der Klärschlamm 1 auf 15% Trockensubstanzanteil entwässert wird. Das abgetrennte Wasser 15 wird dem Einlauf der Kläranlage zurückgeführt. Der entwässerte Klärschlamm wird in der Vorrichtung zur hydrothermalen Karbonisierung von Klärschlamm (HTC Anlage 4) im "TDH-Modus" behandelt und das Produkt 7 anschließend durch ein (zweites) 2/3 Wegeventil 5 zurückgeführt zur Faulung (in den Faulbehälter 8). Die Vorrichtung zur hydrothermalen Karbonisierung (HTC Anlage 4) wird dabei (im "TDH-Modus") mit einer maximalen Temperatur von 160°C, einem pH-Wert von 6 und einer Aufenthaltsdauer von 60min betrieben.

(Durch diese Rückführung und) durch die kontinuierliche Zuführung von nicht behandeltem Klärschlamm (insbesondere vorteilhaft ist hier Primärschlamm) (16) steigt der Füllstand des Faulbehälters 8, bis ein maximaler Füllstand erreicht ist, der durch ein Füllstandsmessgerät oder eine Gewichtsmessung 14 (Messung 14) bestimmt wird. Anschließend wird (zum Wechsel der HTC Anlage in den "HTC-Modus", und nach der Faulung) durch Umschalten der Ventile 2 und 5 der Klärschlamm (Faulbehälterklärschlamm 9) der Vorrichtung zur Faulung (dem Faulbehälter 8) entnommen, in der (ersten) Entwässerungsmaschine 3 auf 20% Trockensubstanzanteil entwässert, (das abgetrennte Wasser 15 dem Einlauf der Kläranlage zurückgeführt,) anschließend in der Vorrichtung zur hydrothermalen Karbonisierung (HTC Anlage 4) (im "HTC-Modus") behandelt und dann der (zweiten) Entwässerungsmaschine 6 zugeführt. Dies kann eine Zentrifuge oder besonders bevorzugt eine Kammerfilterpresse sein, in der der behandelte und ausgefaulte Klärschlamm auf 70% Trockensubstanzgehalt entwässert wird und anschließend entsorgt werden kann (behandelter und ausgefaulter Klärschlamm 13). Das in der (zweiten) Entwässerungsmaschine 6 abgetrennte Filtrat 10 wird einer Vorrichtung zur Abtrennung von Phosphor und Nitrat (Abtrennvorrichtung 11) zugeführt. In dieser wird zunächst dem Filtrat (10) Magnesium beigemischt, der pH-Wert des Filtrats (10) durch die Zugabe von Säure auf pH10 angehoben und das sich bildende Struvit, eine kristalline Verbindung des Phosphors mit Magnesium und Stickstoff, abgetrennt (Nährstoff 12). Ebenso wird über eine Strippung überschüssiger Stickstoff ausgegast (Nährstoff 12). Das von Stickstoff und Phosphor abgereinigte Filtrat (gereinigtes Filtrat 17) wird der Vorrichtung zur Faulung zugeführt (Faulbehälter 8).

Die Vorrichtung zur hydrothermalen Karbonisierung (HTC Anlage 4) wird in diesem Betriebszustand (im "HTC-Modus") mit einer maximalen Temperatur von 180°C, einem pH-Wert von 4 und einer Aufenthaltsdauer von 180 min betrieben. In diesem Betriebszustand kann der Vorrichtung zur Faulung (Faulbehälter 8) auch ein Teil des Klärschlamms direkt zugeführt werden (Klärschlamm 16), um die (zu behandelnde Menge und damit die) Behandlungsdauer im vorherigen Betriebszustand (im "TDH Modus") zu verkürzen. Dazu wird der Primärschlamm der Kläranlage verwendet, da dieser auch ohne eine Behandlung in der Vorrichtung zur hydrothermalen Karbonisierung (HTC Anlage 4) einen hohen Faulgasertrag ergibt. Dieser Betriebszustand ("HTC-Modus") wird beibehalten, bis ein minimaler Füllstand erreicht ist, der durch das Füllstandsgerät oder die Gewichtsmessung (Messung 14) erfasst wird. Daraufhin werden die Ventile 2 und 5 umgeschaltet und der Klärschlamm durchfließt das System wieder in der oben beschriebenen Reihenfolge. Es schließt sich wieder der oben beschriebene Betrieb an (Betrieb der HTC Anlage im "TDH-Modus").

Primärschlamm ist hierbei der Schlamm, der in einem ersten gravimetrischen Absetzbecken aus dem Abwasser abgezogen wird. Überschussschlamm ist der Schlamm, der während der biologischen Reinigung des Abwassers entsteht und durch ein zweites gravimetrisches Absetzbecken aus dem gereinigten Abwasser abgezogen wird. Dem Fachmann sind noch weitere gängige Verfahren zur Trennung von Schlamm aus Abwasser oder gereinigtem Abwasser bekannt, z.B. Membranverfahren. Klärschlamm bezeichnet ein Gemisch von Primärschlamm und Überschussschlamm.

## Patentansprüche

1. Verfahren zur hydrothermalen Karbonisierung (HTC) und Faulung von Klärschlamm, **dadurch gekennzeichnet, dass** wechselweise eine Vorrichtung zur hydrothermalen Karbonisierung von Klärschlamm einer Vorrichtung zur Faulung von Klärschlamm vor- und nachgeschaltet wird, sodass die Vorrichtung zur hydrothermalen Karbonisierung und die Vorrichtung zur Faulung in wechselnder Reihenfolge vom Klärschlamm durchflossen werden; wobei die Anlagentechnik zur hydrothermalen Karbonisierung wechselweise in einem HTC-Modus und in einem Thermo-Druck-Hydrolyse (TDH) Modus betrieben und entsprechend unterschiedlich mit der Klärschlammfaulung verbunden wird; wobei im HTC-Modus die Anlagentechnik zur hydrothermalen Karbonisierung nach der Faulung betrieben wird und im TDH-Modus die Anlagentechnik zur hydrothermalen Karbonisierung vor der Faulung betrieben wird.

2. Verfahren nach Anspruch 1, **dadurch gekennzeichnet, dass** der Klärschlamm bei vorgeschalteter Faulung zunächst eine Faulung durchläuft, anschließend mit oder ohne Entwässerung einer hydrothermalen Karbonisierung zugeführt wird und anschließend entwässert wird, wobei die in der Entwässerung entstehende flüssige Phase der vorgeschalteten Faulung wieder zugeführt wird.

3. Verfahren nach Anspruch 2, **dadurch gekennzeichnet, dass** der flüssigen Phase vor der Zuführung in die vorgeschaltete Faulung Calciumsilikathydrat CSH in Korngrößen <10mm in einer Menge von <10 Massenprozent hinzugegeben wird und nach einer Reaktionszeit von mindestens 20 Minuten in einer Vorrichtung zur Fest-Flüssigtrennung das CSH abgetrennt wird und anschließend die flüssige Phase der vorgeschalteten Faulung wieder zugeführt wird.

4. Verfahren nach Anspruch 2, **dadurch gekennzeichnet, dass** die flüssige Phase vor der Zuführung in die vorgeschaltete Faulung im pH Wert auf >pH6 angehoben wird.

5. Verfahren nach Anspruch 4, **dadurch gekennzeichnet, dass** nach der pH Anhebung ein Teil des in der flüssigen Phase enthaltenen Stickstoff oder Phosphor durch Ausgasen, Kristallisation oder Fällungsreaktion in dem Maße abgetrennt wird, dass damit die Konzentration von Stickstoff oder Phosphor in der flüssigen Phase um > 20% reduziert wird.

6. Verfahren nach einem der vorgenannten Ansprüche, **dadurch gekennzeichnet, dass** die Aufenthaltsdauer des Klärschlamms in einem druckbeaufschlagten Bereich der Vorrichtung zur hydrothermalen Karbonisierung in dem TDH-Modus bei nachgeschalteter Faulung um mindestens 30 min kleiner ist als in dem HTC-Modus bei vorgeschalteter Faulung, indem die Durchflussgeschwindigkeit des Klärschlamms um mindestens 30% erhöht oder das druckbeaufschlagte Volumen der Vorrichtung zur hydrothermalen Karbonsierung um mindestens 30% kleiner als bei vorgeschalteter Faulung ist.

7. Verfahren nach einem der vorgenannten Ansprüche, **dadurch gekennzeichnet, dass** die Temperatur, die in der Vorrichtung zur hydrothermalen Karbonisierung maximal erreicht wird, in dem TDH-Modus bei nachgeschalteter Faulung um mindestens 5°C kleiner als in dem HTC-Modus bei vorgeschalteter Faulung ist.

8. Verfahren nach einem der vorgenannten Ansprüche, **dadurch gekennzeichnet, dass** der Wechsel der Reihenfolge, in der der Klärschlamm die Vorrichtung zur hydrothermalen Karbonisierung und die Vorrichtung zur Faulung durchfließt, durch Umschalten von Ventilen oder Schiebern erfolgt, und zwar in dem Moment, zu dem ein vordefinierter Füllstand in der Vorrichtung zur Faulung erreicht wird und/oder eine vordefinierte Klärschlammmenge behandelt wurde und/oder ein vordefiniertes Zeitintervall abgelaufen ist.

9. Eine Vorrichtung zur Durchführung des Verfahrens nach zumindest einem der Ansprüche 1 bis 8.

## Claims

1. Process for hydrothermal carbonization (HTC) and digestion of sewage sludge, **characterized in that** a device for hydrothermal carbonization of sewage sludge is alternately connected upstream and downstream of a device for digestion of sewage sludge, so that the device for hydrothermal carbonization and the device for digestion are flowed through by the sewage sludge in alternating sequence; wherein the plant technology for hydrothermal carbonization is operated alternately in an HTC mode and in a thermo-pressure hydrolysis (TDH) mode and is connected correspondingly differently to the sewage sludge digestion; wherein in the HTC mode the plant technology for hydrothermal carbonization is operated after the digestion and in the TDH mode the plant technology for hydrothermal carbonization is operated before the digestion.

2. Process according to claim 1, **characterized in that**, in the case of upstream digestion, the sewage sludge first passes through digestion, is then fed to hydrothermal carbonization with or without dewatering, and is then dewatered, the liquid phase resulting from the dewatering being fed back to the upstream digestion.

3. Process according to claim 2, **characterized in that** calcium silicate hydrate CSH in particle sizes <10 mm is added to the liquid phase in an amount of <10 mass percent before the liquid phase is being fed to the upstream digestion, and after a reaction time of at least 20 minutes the CSH is separated in a solid-liquid separation device and then the liquid phase is fed back to the upstream digestion.

4. Process according to claim 2, **characterized in that** the pH value of the liquid phase is raised to >pH6 before it is fed to the upstream digestion.

5. Process according to claim 4, **characterized in that**, after the pH increase, a part of the nitrogen or phosphorus contained in the liquid phase is separated by outgassing, crystallization or precipitation reaction to the extent that the concentration of nitrogen or phosphorus in the liquid phase is thereby reduced by > 20%.

6. Process according to one of the preceding claims, **characterized in that** the residence time of the sewage sludge in a pressurized region of the device for hydrothermal carbonization in the TDH mode with downstream digestion is at least 30 minutes shorter than in the HTC mode with upstream digestion, **in that** the flow rate of the sewage sludge is increased by at least 30% or the pressurized volume of the device for hydrothermal carbonization is at least 30% smaller than with upstream digestion.

7. Process according to one of the preceding claims, **characterized in that** the maximum temperature reached in the hydrothermal carbonization apparatus is at least 5°C lower in the TDH mode with downstream digestion than in the HTC mode with upstream digestion.

8. Process according to one of the preceding claims, **characterized in that** the change of the order in which the sewage sludge flows through the device for hydrothermal carbonization and the device for digestion is effected by switching valves or sliders, namely at the moment when a predefined filling level is reached in the device for digestion and/or a predefined sewage sludge quantity has been treated and/or a predefined time interval has expired.

9. A device for carrying out the method according to at least one of claims 1 to 8.

## Revendications

1. Procédé pour la carbonisation hydrothermale (HTC) et la digestion de boues d'épuration, **caractérisé en ce qu'**un dispositif de carbonisation hydrothermale de boues d'épuration est placé en alternance en amont et en aval d'un dispositif de digestion de boues d'épuration, de sorte que le dispositif de carbonisation hydrothermale et le dispositif de digestion soient traversés par des boues d'épuration en un ordre alterné; les équipements techniques de carbonisation hydrothermale étant exploités en alternance dans un mode HTC et dans un mode thermo-pression-hydrolyse (TDH) et étant reliés en conséquence de manière différente avec la digestion de boues d'épuration; dans lequel dans le mode HTC, les équipements techniques de carbonisation hydrothermale sont exploités après la digestion et dans le mode TDH, les équipements techniques de carbonisation hydrothermale sont exploités avant la digestion.

2. Procédé selon la revendication 1, **caractérisé en ce que** les boues d'épuration traversent, lors d'une digestion située en amont, d'abord une digestion, sont ensuite alimentées à une carbonisation hydrothermale avec ou sans déshydratation et par la suite sont déshydratées, la phase liquide produite dans la déshydratation étant alimentée à nouveau à la digestion située en amont.

3. Procédé selon la revendication 2, **caractérisé en ce que** du silicate de calcium hydraté CSH est ajouté à la phase liquide avant l'alimentation dans la digestion située en amont, en des tailles de particule < 10 mm et en une quantité de < 10 pour cent en masse et le CSH est séparé dans un dispositif de séparation solide-liquide après un temps de réaction d'au moins 20 minutes et par la suite la phase liquide est alimentée à nouveau à la digestion située en amont.

4. Procédé selon la revendication 2, **caractérisé en ce que** la valeur de pH de la phase liquide avant l'alimentation dans la digestion située en amont est élevée à > pH 6.

5. Procédé selon la revendication 4, **caractérisé en ce qu'**après l'élévation du pH, une partie de l'azote ou du phosphore contenu dans la phase liquide est séparée par dégazage, cristallisation ou une réaction de précipitation de façon à ce que la concentration d'azote ou de phosphore dans la phase liquide soit ainsi réduite de > 20 %.

6. Procédé selon l'une quelconque des revendications précédentes, **caractérisé en ce que** la durée de séjour des boues d'épuration dans une zone pressurisée du dispositif de carbonisation hydrothermale dans le mode TDH lors d'une digestion située en aval, est plus faible d'au moins 30 min que dans le mode HTC lors d'une digestion située en amont, du fait que la vitesse de passage des boues d'épuration est élevée d'au moins 30 % ou que le volume pressurisé du dispositif de carbonisation hydrothermale est au moins 30 % plus petit que lors de la digestion située en amont.

7. Procédé selon l'une quelconque des revendications précédentes, **caractérisé en ce que** la température maximale atteinte dans le dispositif de carbonisation hydrothermale dans le mode TDH lors d'une digestion située en aval est au moins 5 °C plus faible que dans le mode HTC lors d'une digestion située en amont.

8. Procédé selon l'une quelconque des revendications précédentes, **caractérisé en ce que** le changement d'ordre dans lequel les boues d'épuration traversent le dispositif de carbonisation hydrothermale et le dispositif de digestion, est réalisé par commutation de soupapes ou de glissières, et ce au moment auquel un niveau prédéfini dans le dispositif de digestion est atteint et/ou une quantité prédéfinie de boues d'épuration a été traitée et/ou un intervalle de temps prédéfini est passé.

9. Dispositif pour la réalisation du procédé selon au moins l'une des revendications 1 à 8.
